# EUROPÄISCHE PATENTSCHRIFT

(11) **EP 2 533 112 B1**
(45) Veröffentlichungstag und Bekanntmachung des Hinweises auf die Patenterteilung: **01.01.2014**
(21) Anmeldenummer: 11169446.9
(22) Anmeldetag: 10.06.2011
(51) Int. Cl.: G05B 19/042

(54) **Verfahren zur Überwachung einer Anlage**
Method for monitoring an assembly
Procédé destiné à la surveillance d'une installation

(43) Veröffentlichungstag der Anmeldung: 12.12.2012
(73) Patentinhaber: Siemens Aktiengesellschaft, 80333 München (DE)
(72) Erfinder: Glas, Karl, 91074 Herzogenaurach (DE)

(56) Entgegenhaltungen:
- EP-A1- 2 192 458
- US-A1- 2002 143 410

## Beschreibung

Die vorliegende Erfindung betrifft ein Verfahren zur Überwachung einer Anlage mit einem ersten und zweiten Energie-Betriebszustand, wobei die Anlage im ersten und zweiten Energie-Betriebszustand einen unterschiedlichen Energieverbrauch aufweist.

Derartige Verfahren sind aus dem Stand der Technik bekannt. So beschreiben beispielsweise die europäischen Patentveröffentlichungen EP 2 192 457 A1 oder EP 2 192 458 A1 Verfahren zur Aktivierung eines aus einer Mehrzahl von aktivierbaren Betriebszuständen einer technischen Anlage, bei welchem vor einem Umschalten der Anlage in einen anderen Betriebszustand überprüft wird, ob die angeforderte Änderung eines Betriebszustands durch vorgegebene Parametergrenzen erlaubt ist.

In US 2002/0143410 A1 ist ein Verfahren zur Steuerung eines Mikroprozessors nach einem Energieversorgungsausfall beschrieben, bei dem der Mikroprozessor während des Energieversorgungsausfalls mit einem Stütz-Kondensator verbunden wird. Außerdem wird der Mikroprozessor während des Energieversorgungsausfalls in einen Energiesparmodus umgeschaltet.

Ausgehend von diesem genannten Stand der Technik ist es eine Aufgabe der vorliegenden Erfindung, die Überwachung von Anlagen mit mindestens zwei Energie-Betriebszuständen für eine Ermittlung eines Wartungs- oder Betriebszustands einer Anlage weiter zu verbessern.

Diese Aufgabe wird gelöst durch ein Verfahren mit den Merkmalen des vorliegenden Patentanspruchs 1.

Ein solches Verfahren zur Überwachung einer Anlage mit einem ersten und einem zweiten Energie-Betriebszustand, wobei die Anlage im ersten und zweiten Energie-Betriebszustand an unterschiedlichen Energieverbrauch aufweist, umfasst die folgenden Schritte:
a. Umschalten der Anlage mittels eines ersten Schalt-Befehls vom ersten in den zweiten Energie-Betriebszustand,
b. Ermitteln einer ersten Umschalt-Zeitspanne zwischen dem Beginn des Umschaltvorganges und dem Erreichen des zweiten Energie-Betriebszustandes, und
c. Abspeichern der ersten Umschalt-Zeitspanne in einer der Anlage zugeordneten Datenbank für Umschalt-Zeitspannen und/oder Abspeichern einer unter Verwendung der ersten Umschalt-Zeitspanne ermittelten Zustands-Information bezüglich der Anlage in einer der Anlage zugeordneten Zustands-Datenbank.

Bei dem ersten Energie-Betriebszustand kann es sich beispielsweise um einen Normal- oder Arbeitszustand der Anlage und bei dem zweiten Energie-Betriebszustand um einen Energiespar-Zustand der Anlage handeln. Dabei kann im Energiespar-Zustand beispielsweise vorgesehen sein, dass Anlagenteile abgeschaltet oder zumindest mit verringerter Energie betrieben werden. In solchen oder ähnlichen Fällen kann das Umschalten zwischen solchen Betriebszuständen einem zumindest teilweisen Hoch- oder Herunterfahren der Anlage bzw. von Anlagenteilen entsprechen. Aus dann ermittelten Hoch- oder Herunterfahrzeiten lässt sich häufig auf einen allgemeinen oder auch speziellen Funktions-, Betriebs- und/oder technischen Zustand der Anlage oder von Teilen der Anlage zurückschließen. Insbesondere durch einen Vergleich einer ermittelten Umschalt-Zeitspanne mit einem oder mehreren vorher gemessenen Werten, einem oder mehreren vorgegebenen Werten und/oder auch mit einem vorgegebenen Schwellwert können beispielsweise Änderungen innerhalb einer Anlage oder bei Anlagenteilen erkannt werden (z.B. Verschleiß-, Abnutzungs- und/oder Alterungserscheinungen). Dann können daraufhin beispielsweise frühzeitig Wartungs- und/oder Pflegemaßnahmen oder auch entsprechende Austauschmaßnahmen von Teilen oder Komponenten eingeleitet werden, womit dann im Folgenden z.B. ein potentieller Gesamtausfall der Anlage verhindert oder zumindest hinausgezögert werden kann.

So können beispielsweise bei jedem Herunterfahren und/oder Hochfahren der Anlage bzw. von Anlagenteilen die jeweiligen Umschalt-Zeitspannen erfasst werden und anschließend mit protokollierten Daten oder vorgegebenen Daten verglichen werden. Aus dem Vergleich solcher Zeitwerte (z. B. einer Verlängerung der Hochlaufzeit beispielsweise aufgrund mechanischer Trägheitsänderungen, Verschleiß- oder Alterungserscheinungen der Anlage) lassen sich z. B. anhand vorgegebener Toleranzwerte geeignete Maßnahmen, wie z. B. Wartungs- oder Pflegemaßnahmen der Anlage oder auch ein Gerätetausch bzw. Maschinentausch ableiten. Durch sich beispielsweise allmählich verlängernde Umschalt-Zeitspannen lassen sich Anlagenfehler z. B. frühzeitig und unter Umständen vor einem Anlagenausfall erkennen. Durch beispielsweise anhand von vorgegebenen Schwellwerten definierte Wartungsmaßnahmen kann die Anlage dann beispielsweise rechtzeitig wieder in einen verbesserten Zustand gebracht werden, wodurch längere Stillstandszeiten unter Umständen vermieden oder herausgezögert werden können.

Unter einer "Anlage" wird im Zusammenhang mit der vorliegenden Beschreibung eine technische Anlage verstanden. Solche technischen Anlagen können beispielsweise mehrere Elemente, Anlagenteile oder Anlagensegmente umfassen. Anlagenelemente können beispielsweise verschiedenste Sensoren, Antriebe, Förderelemente, Robotereinheiten oder Ähnliches sein. Eine Anlage kann beispielsweise als eine Produktionsanlage, als Produktionsmaschine, als Förderanlage, als Fördermaschine, als Werkzeugmaschine, als Bearbeitungsanlage, als Roboter und/oder als ein technisches Gerät, beispielsweise ein Mess- und oder Steuergerät ausgebildet und eingerichtet sein bzw. derartige Geräte oder Anlagen umfassen.

Beim ersten Energie-Betriebszustand kann es sich beispielsweise um einen Normal-Betriebszustand handeln, bei welchem die Anlage ihre vorgesehene Aufgabe ohne wesentliche Einschränkungen ausübt. Der zweite Energie-Betriebszustand kann beispielsweise als ein Energie-Spar-Zustand ausgebildet sein, in welchem die Anlage weniger Energie verbraucht als im Normal-Betriebszustand und beispielsweise ihre Aufgaben nur noch eingeschränkt (z. B. langsamer und/oder weniger Teilaufgaben aufweisend) oder nicht mehr ausübt.

Es können beispielsweise zusätzlich noch weitere Energie-Betriebszustände mit verschiedenen Energieverbrauchs-Werten und/oder Aktivitätsniveaus der Anlage vorgesehen sein. Das für zwei Energie-Betriebszustände in der vorliegenden Beschreibung beschriebene Verfahren kann entsprechend auch auf mehr als zwei Energie-Betriebszustände angewandt werden, in dem beispielsweise die Umschalt-Zeitspannen zwischen allen dieser Energie-Betriebszustände ermittelt wird oder auch nur zwischen ausgewählten Umschaltvorgängen.

Unter einem unterschiedlichen Energieverbrauch der Energie-Betriebszustände kann beispielsweise ein unterschiedlicher Gesamtverbrauch der Anlage an Energie in den jeweiligen Betriebszuständen verstanden werden. Der Energieverbrauch der Anlage kann sich beispielsweise aus elektrischer Energie und/oder anderen Energieformen wie beispielsweise einer Antriebsenergie z. B. durch einen Verbrennungsmotor, eine Brennstoffzelle oder Ähnliches, zusammensetzen. Weiterhin kann sich der dem vorliegenden Verfahren zugrunde gelegte Energieverbrauch auch nur auf Teile der von der Anlage verbrauchte Energie beschränken, beispielsweise ausschließlich auf verbrauchte elektrische Energie. Der zur Ermittlung des Energieverbrauchs in den verschiedenen Betriebszuständen zugrunde gelegte Verbrauch kann sich auch auf den Energieverbrauch bestimmter Anlagenteile beschränken.

Der erste Schaltbefehl zum Umschalten der Anlage vom ersten in den zweiten Energie-Betriebszustand kann beispielsweise von extern (z. B. von einem externen Gerät, beispielsweise einem Steuergerät, außerhalb der Anlage) oder von intern (z. B. aufgrund eigener Auswertung innerhalb der Anlage selbst) ausgelöst werden oder von dort erfolgen. Eine interne Auslösung eines solchen ersten Schalt-Befehls kann beispielsweise aufgrund einer Auswertung aufgrund bestimmter Betriebsparameter oder Bedienungsparameter erfolgen, wie beispielsweise "keine Bedienaktion" oder "keine Anfrage" über einen bestimmten, vorgegebenen Zeitraum und/oder bestimmte Pausen- und/oder Nachtzeiten. Weiterhin kann beispielsweise auch ein interner Schaltbefehl durch einen externen Triggerbefehl in Zusammenhang mit dem internen Abprüfen bestimmter Bedingungen ausgelöst werden.

Die Auswertung des Vergleichs kann dabei z.B. selbsttätig, durch eine Person oder durch einen oder mehrere Eingabebefehle ausgelöst erfolgen. Sie kann z.B. in einer Steuerungseinheit, einem Controller, PC oder auch händisch erfolgen.

Insbesondere kann das Umschalten der Anlage, die ersten und zweiten Energie-Betriebszustände und/oder der erste Schaltbefehl gemäß dem so genannten "PROFIenergy"-Standard oder einem vergleichbaren Standard ausgebildet und eingerichtet sein.

Weiterhin kann das vorstehend genannte Verfahren auch auf ein Umschalten der Anlage vom zweiten in den ersten Energie-Betriebszustand sowie in möglicherweise vorgesehene weitere Energie-Betriebszustände und zwischen solchen Energie-Betriebszuständen ausgeweitet werden. Beispielsweise kann vorgesehen sein, dass alle derartigen Umschaltvorgänge zwischen solchen Energie-Betriebszuständen protokolliert werden. Es kann auch vorgesehen sein, dass nur eine Auswahl von Umschalt-Vorgängen zwischen derartigen Energie-Betriebszuständen gemäß der vorliegenden Beschreibung erfasst und protokolliert werden.

Der Beginn des Umschaltvorgangs zum Ermitteln der ersten Umschalt-Zeitspanne kann beispielsweise dem Zugang bzw. der internen Verarbeitung des ersten Schaltbefehls entsprechen oder einem einem solchen Zugang bzw. einer solchen Verarbeitung zugeordneten Zeitpunkt. Das Erreichen des zweiten Energie-Betriebszustandes kann beispielsweise beim Erreichen eines definierten oder vorgegebenen Zeitpunkts im zweiten Energie-Betriebszustand entsprechen, z. B. dem Erreichen eines stationären, stabilen Zustands oder auch dem Erfolgen einer internen Signalisierung, Nachricht und/oder Feedback, dass der zweite Energie-Betriebszustand erreicht ist.

Die Datenbank für Umschalt-Zeitspannen und/oder die Zustands-Datenbank kann beispielsweise innerhalb der Anlage oder auch in einer externen Einrichtung, beispielsweise einer Steuereinrichtung für die Anlage (z. B. einer speicherprogrammierbaren Steuerung) einer Bedienen- und -Beobachten-Einrichtung, einem Netzlaufwerk und/oder ähnlichen externen Einrichtungen vorgesehen sein.

Unter einer Datenbank wird im Rahmen der vorliegenden Beschreibung z.B. ein Speicherbereich verstanden, der Hardware- und Software-mäßig zum Abspeichern des diesbezüglich genannten Datums, bzw. der diesbezüglich genannten Daten, eingerichtet und ausgebildet ist. Insbesondere wird unter einer Datenbank z.B. auch eine Datensammlung gleichartiger Daten oder Datengruppen, die im vorliegenden Fall eine oder mehrere Umschalt-Zeitspannen umfassen, verstanden.

Die unter Verwendung der ersten Umschalt-Zeitspanne ermittelte Zustands-Information kann beispielsweise eine Zeitdauer oder Betriebsstunden-Dauer bis zur nächsten Pflege- oder Wartungs-Maßnahme sein bzw. umfassen oder auch eine Einstufung in zwei oder mehrere Zustandskategorien. Dabei kann die Zustands-Information beispielsweise ausschließlich aufgrund der ermittelten Umschalt-Zeitspanne bzw. mehreren ermittelten Umschalt-Zeitspannen und/oder einer vorgegebenen Umschalt-Zeitspanne bestimmt werden. Weiterhin kann die Zustandsinformation aber auch unter Berücksichtigung weiterer Eigenschaftsparameter der Anlage (wie z. B. einer Betriebstemperatur, ein Energieverbrauch, einer Auswertung akustischer Informationen und Ähnlichem) ermittelt werden.

Erfindungsgemäß wird die ermittelte erste Umschalt-Zeitspanne mit mindestens einer früher gemessenen Umschalt-Zeitspanne für die Umschaltung des Geräts vom ersten in den zweiten Energie-Betriebszustand und/oder mit einer vorgegebenen Um-schalt-Zeitspanne für die Umschaltung des Geräts vom ersten in den zweiten Energie-Betriebszustand verglichen und dann optional weiterhin dieser Vergleich ausgewertet.

Auf diese Weise kann beispielsweise durch vergleich der ermittelten Umschalt-Zeitspanne mit einer oder mehreren früher gemessenen Umschalt-Zeitspannen ermittelt werden, ob sich beispielsweise eine Hoch- oder Herunterfahr-Zeit für die Anlage um einen bestimmten Betrag oder Prozentsatz ändert und/oder inwiefern sich Änderungen zwischen zwei oder mehreren Umschalt-Zeitspannen beispielsweise vergrößern, gleich bleiben oder verkleinern. Auf diese Weise kann z.B. anhand der Änderung der Umschalt-Zeitspannen auf einen Wartungs- oder Betriebs-Zustand der Anlage geschlossen werden und nachfolgend ggf. entsprechende Wartungs- oder Austausch-Tätigkeiten eingeleitet werden.

Weiterhin kann durch Vergleich der ermittelten Umschalt-Zeitspanne mit einem vorgegebenen Wert, beispielsweise einem Soll-Zeitwert für die entsprechende Zustands-Umschaltung, ermittelt werden, wie weit die derzeitige Umschalt-Zeitspanne von dem vorgegebenen Wert abweicht. Dann kann aufgrund dieser Information z.B. wiederum auf einen Wartungs- oder Betriebszustand der Anlage geschlossen werden.

Im Rahmen einer weiteren Auswertung der genannten Vergleichsmöglichkeiten kann dann beispielsweise eine Information ermittelt werden, die einem Wartungs- oder Betriebszustand entspricht und/oder welche einen Hinweis auf mögliche und/oder notwendige Wartungs- oder Austausch-Arbeiten gibt. Weiterhin kann vorgesehen sein, dass im Rahmen einer solchen Auswertung die Ausgabe einer Warn-Information vorgesehen sein kann, beispielsweise wenn die Auswertung ein bestimmtes Ergebnis bringt. Eine solche Warn-Information kann beispielsweise eine Wartungsempfehlung, eine erforderliche Wartungs- oder Austauschmaßnahme innerhalb eines bestimmten vorgegebenen Zeitraumes oder Ähnliches sein oder umfassen. Weiterhin können solche Warn-Informationen beispielsweise Anforderungen von Wartungs- und/oder Pflegemaßnahmen, Warnung vor einem Geräte- , Anlagen- und/oder Komponenten-Ausfall, Anforderung von Geräte-, Anlage- und/oder Komponenten-Austausch oder ähnliche Informations-Nachrichten oder Signale sein oder umfassen.

Warn-Informationen, wie beispielsweise die genannten, können z.B. ausgegeben werden, wenn die Abweichung zwischen einem Ist- und Soll-Wert für die Umschaltzeit einen gewissen, vorgegebenen Schwellwert überschreitet. Weiterhin kann eine solche Warn-Information beispielsweise ausgegeben werden, wenn die Änderungen zwischen der aktuellen und der vorherigen Umschalt-Zeitspanne einen vorgegebenen Schwellwert übersteigt.

Die Ausgabe der Warn-Information kann beispielsweise über eine Anzeigeeinheit oder optische Anzeigeelemente oder Ähnliches erfolgen. Weiterhin kann die Ausgabe einer Warn-Information auch als elektronische Nachricht ausgebildet sein bzw. im Rahmen der Ausgabe einer elektronischen Information oder Nachricht erfolgen. Solche Nachrichten können beispielsweise an eine externe Überwachungseinheit, eine externe oder interne Steuerungseinheit, eine externe oder interne Bedien- oder Beobachtungseinheit oder auch eine externe oder interne optische oder akustische Anzeigeeinheit (z.B. einen Panel-PC) ausgegeben werden. Die Ausgabe der Warn-Information kann beispielsweise auch als akustische Information oder akustisches Signal ausgestaltet sein oder als Solches umfassen.

Die Warn-Information bzw. die Ausgabe der Warn-Information kann auch mit den Betriebs-Zuständen bzw. Zeitspannen z.B. in einer Steuerungseinheit und/oder einer Speicherprogrammierbaren Steuerung verknüpft sein oder auch mit deren Verarbeitung.

Vor dem Umschalten der Anlage mittels des ersten Schaltbefehls kann vorgesehen sein, dass die Anlage eine Umschaltanfrage mit mindestens einem Umschaltparameter erhält. Die Anlage wertet diese Anfrage unter Berücksichtigung des Umschaltparameters dann aus und löst z.B. dann den ersten Umschaltbefehl aus, wenn die Auswertung der Anfrage ergibt, dass ein Umschalten vom ersten in den zweiten Energie-Betriebszustand vorgenommen werden soll. Solche Umschaltparameter können beispielsweise einen vorgesehenen Abschalt- oder Pausenzeitpunkt umfassen. Weiterhin kann der Umschaltparameter auch einen vorgegebenen Abschalt- oder Pausenzeitraum umfassen. Die Umschaltanfrage bzw. die Umschaltparameter können beispielsweise einer Umschaltanfrage gemäß dem "PROFIenergy"-Standard oder einem vergleichbaren Standard ausgestaltet und/oder eingerichtet sein.

So kann beispielsweise die Anlage nach Erhalten einer Umschaltanfrage, die beispielsweise als Umschaltparameter einen vorgesehenen Pausenzeitraum aufweist, anhand der internen Anlagenparameter, wie z.B. der vorgegebenen Herunter- und Hochlaufzeiten und auch weiterer Anlagen-Kenngrößen, entscheiden, ob die Anlage für einen gewissen Pausenzeitraum beispielsweise in einen Energiespar-Zustand heruntergefahren werden soll oder ob die Pause zum Herunterfahren z.B. zu kurz ist, da ein Herunter- und dann wieder Hochfahren möglicherweise zu unwirtschaftlich oder schlicht zeitlich unmöglich wäre. Je nach Ergebnis der Auswertung fährt sich die Anlage dann z.B. in den genannten Energiespar-Zustand oder auch nicht.

Bei der Auswertung der Umschaltanfrage kann, wie vorstehend beispielhaft bereits erwähnt, eine oder mehrere vorgegebene und/oder ermittelte Umschaltzeiten vom ersten in den zweiten Energiebetriebszustand, oder auch anders herum, allein bzw. mit-berücksichtigt werden. Insbesondere können die Umschaltparameter sowie die Anfrage-Auswertung beispielsweise wiederum gemäß dem PROFIenergy-Standard oder einem vergleichbaren Standard ausgebildet und eingerichtet sein.

Die vorstehend genannte Aufgabe wird auch gelöst von einer Anlage, die derart eingerichtet und ausgebildet ist, dass sie in einem ersten und einem zweiten Energiebetriebszustand betreibbar ist, wobei die Anlage im ersten und zweiten Energiebetriebszustand einen unterschiedlichen Energieverbrauch aufweist, und wobei die Anlage weiterhin eine Steuereinrichtung umfasst, die zur Durchführung eines Verfahrens gemäß der vorliegenden Beschreibung ausgebildet und eingerichtet ist.

Wie bereits im Zusammenhang mit dem vorstehend beschriebenen Verfahren erläutert, ergibt sich durch die genannte Protokollierung der Umschaltzeit eine verbesserte Möglichkeit, die Anlage zu überwachen und dabei z.B. Anlagenzustände zu protokollieren, zu analysieren und auszuwerten.

Dabei können der erste und zweite Energie-Betriebszustand sowie die Anlage wie in der vorliegenden Beschreibung beispielhaft näher ausgeführt ausgebildet und eingerichtet sein.

Die Steuereinrichtung kann beispielsweise als sogenannter Controller, als eine speicherprogrammierbare oder vergleichbare Steuerung, als Teil einer derartigen Steuerung oder auch als Rechner, PC oder ähnliche Datenverarbeitungseinrichtung ausgebildet und eingerichtet sein. Des Weiteren kann die Steuerung beispielsweise vollständig auch baulich in die Anlage integriert sein. Die Steuereinrichtung kann auch teilweise baulich mit der Anlage integriert sein, wobei ein weiterer Teil der Steuereinrichtung sich außerhalb der Anlage befinden kann und mit dieser beispielsweise über ein drahtloses Netzwerk, beispielsweise ein Feldbusnetz, verbunden sein kann. Die Steuereinrichtung kann auch baulich vollständig außerhalb anderer bzw. der anderen Teile der Anlage vorgesehen sein und mit diesen anderen Teilen der Anlage über ein drahtloses oder drahtgebundenes Kommunikationsnetz, beispielsweise ein Feldbusnetz, verbunden sein.

Weiterhin kann die Anlage eine Speichereinrichtung zur Speicherung der ersten Umschalt-Zeitspanne, der Zustands-Information bezüglich der Anlage, der mindestens einen früher gemessenen Umschalt-Zeitspanne, der Datenbank für Umschaltzeitspannen, der Zustandsdatenbank und/oder der vorgegebenen Umschalt-Zeitspanne umfassen.

Mit dieser Ausgestaltung können beispielsweise die oben genannten Informationen direkt mit der Anlage oder in Zusammenhang mit der Anlage abgespeichert und dann unter Umständen dann auch ausgewertet werden. Dabei kann die Speichereinrichtung beispielsweise Teil der vorstehend genannten Steuereinrichtung sein oder auch eine gesonderte Einrichtung zur Speicherung der genannten Daten.

Die Anlage kann auch eine Ausgabeeinrichtung zur Ausgabe einer Warn-Information gemäß der vorliegenden Beschreibung umfassen. Insbesondere kann die Ausgabeeinrichtung als optische, akustische und/oder elektronische Ausgabeeinrichtung und/oder als drahtgebundene oder drahtlose Schnittstelle zur Ausgabe und Weitergabe entsprechender Nachrichten oder Informationen ausgebildet und eingerichtet sein. Dabei kann die Ausgabeeinrichtung wiederum baulich als Einheit mit der Anlage angeordnet und eingerichtet sein, oder auch nur mittels einer Kommunikationsverbindung mit dieser verbunden und ansonsten baulich getrennt sein.

Die Steuereinrichtung kann weiterhin zum Empfang einer Umschaltanfrage gemäß der vorliegenden Beschreibung, zur Durchführung einer entsprechenden Anfrage-Auswertung gemäß der vorliegenden Beschreibung sowie zum Auslösen des ersten Umschaltbefehls gemäß der vorliegenden Beschreibung ausgebildet und eingerichtet sein. Insbesondere kann die Steuereinrichtung zum Empfang, zur Verarbeitung und zur Umsetzung sowie auch zur Weitergabe von Befehlen, Informationen und Nachrichten gemäß dem PROFIenergy-Standard und/oder einem vergleichbaren Standard ausgebildet und eingerichtet sein. Insbesondere kann die Steuereinrichtung auch zur Steuerung weiterer Anlagen oder Geräte eingerichtet sein und als solche zumindest eine Komponente aufweisen, welche auch zur Ausgabe von Umschaltanfragen bzw. entsprechenden PROFIenergy-Befehlen und/oder vergleichbaren Befehlen ausgebildet und eingerichtet ist.

Die vorstehend genannte Aufgabe wird weiterhin gelöst von einem Anlagensystem, welches zur Durchführung eines Verfahrens gemäß der vorliegenden Beschreibung eingerichtet und ausgebildet ist, wobei das Anlagensystem eine Anlage gemäß der vorliegenden Beschreibung sowie eine externe Steuereinrichtung umfasst, welche zur Steuerung- und/oder Regelung der Anlage über eine drahtgebundene oder drahtlose Schnittstelle eingerichtet und ausgebildet ist.

Bei der externen Steuereinrichtung kann es sich beispielsweise um eine Steuerung, beispielsweise ein Computer, eine speicherprogrammierbare Steuerung, ein Controller oder Ähnliches, zur Steuerung der gesamten Anlage, zur Steuerung von Teilaufgaben der Anlage, zur Steuerung der Energie-Betriebszustände der Anlage und/oder auch zur Steuerung weiterer Anlagen und Geräte ausgebildet und eingerichtet ist. Dabei kann die externe Steuereinrichtung beispielsweise über ein drahtloses oder drahtgebundenes Kommunikationsnetz, beispielsweise ein TCP/IP-Netz, ein Ethernet-Netz oder ein Feldbusnetz (z. B. gemäß dem PROFINET- oder dem PROFIBUS-Standard) ausgebildet und eingerichtet sein. So kann es sich bei der Steuereinrichtung beispielsweise um eine Steueranlage zur Steuerung einer kompletten Produktionslinie oder Ähnlichem handeln.

Die externe Steuereinrichtung kann beispielsweise eine Speichereinrichtung zur Speicherung der ersten Umschalt-Zeitspanne, der Zustands-Information bezüglich der Anlage, der mindestens einen früher gemessenen Umschalt-Zeitspanne, der Datenbank für Umschalt-Zeitspannen, der Zustandsdatenbank und/oder der vorgegebenen Umschalt-Zeitspannen umfassen. Dabei kann beispielsweise vorgesehen sein, dass die genannten Daten, bzw. Teile davon, sowohl in der Anlage als auch in der externen Steuereinrichtung gespeichert sind oder auch nur in einer der beiden genannten Einrichtungen.

Weiterhin kann die externe Steuereinrichtung eine Ausgabeeinrichtung zur Ausgabe einer Warn-Information gemäß der vorliegenden Beschreibung umfassen, wobei die Ausgabeeinrichtung wiederum gemäß der vorliegenden Beschreibung ausgebildet und eingerichtet sein kann. Weiterhin kann die externe Steuereinrichtung zur Ausgabe einer Umschalt-Anfrage gemäß der vorliegenden Beschreibung an die Anlage ausgebildet und eingerichtet sein.

Zudem kann die externe Steuereinrichtung zur Steuerung vergleichbarer Energie-Betriebszustände weiterer Anlagen oder Geräte eingerichtet sein. So kann beispielsweise die externe Steuereinrichtung zumindest unter Anderem zum Energiemanagement der Anlage und/oder weiterer Anlagen und Geräte ausgebildet und eingerichtet sein, wobei das Energiemanagement beispielsweise zumindest unter Anderem gemäß dem PROFIenergy-Standard und/oder vergleichbaren Standards oder Verfahren ausgebildet und eingerichtet sein kann.

Weitere vorteilhafte Ausgestaltungen finden sich in den Unteransprüchen.

Im Weiteren wird die vorliegende Erfindung beispielhaft mit Bezug auf die beiliegende Figur erläutert.

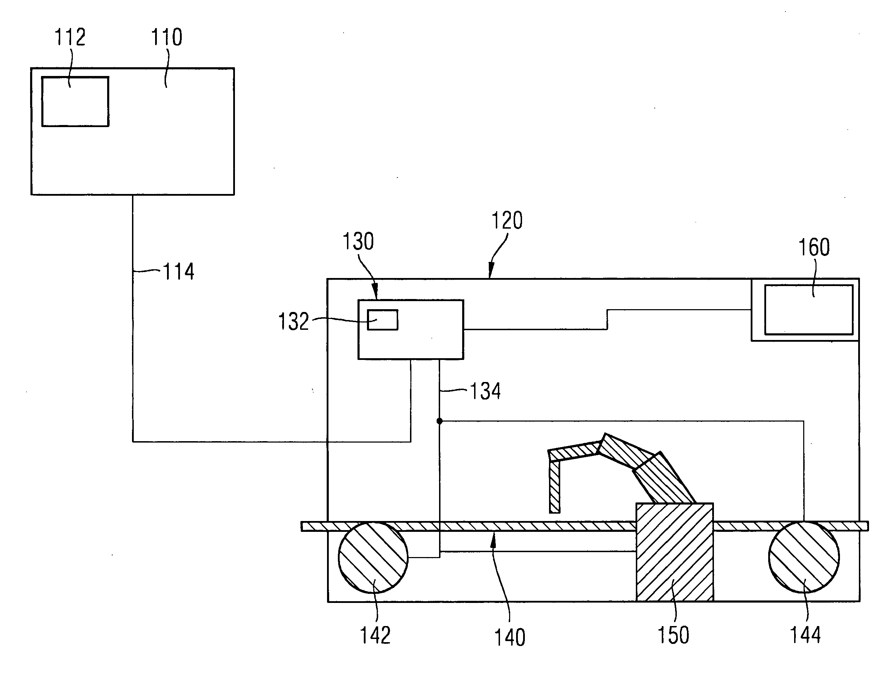

Figur 1 zeigt eine Werkzeugmaschine 120, welche ein Beispiel für eine Anlage gemäß der vorliegenden Beschreibung ist. Die Werkzeugmaschine umfasst einen internen Controller 130 mit einer Speichereinrichtung, welcher über ein Feldbusnetz 134 einen Bearbeitungsroboter 150 der Werkzeugmaschine sowie ein Transportsystem 140 für Werkstücke mit einem ersten Antrieb 142 und einem zweiten Antrieb 144 steuert. Dabei ist die Werkzeugmaschine 120 Teil eines größeren Produktionskomplexes, der in Figur 1 nicht dargestellt ist.

Die Werkzeugmaschine 120 sowie die anderen Produktionsanlagen (nicht in Figur 1 dargestellt) werden durch eine übergeordnete speicherprogrammierbare Steuerung 110 mit einer internen Speichereinrichtung 112 über ein als "PROFINET" ausgebildetes Feldbusnetz 114 gesteuert. Über dieses Feldbusnetz 114 empfängt der Controller 130 der Werkzeugmaschine 120 entsprechende Befehle von der SPS 110, die er analysiert und in entsprechende Stell- und Arbeitsbefehle an die Fördereinrichtung 140 mit den Antrieben 142 und 144 sowie an den Bearbeitungsroboter 150 umsetzt.

Dabei ist der Controller 130 ein Beispiel für eine Steuereinrichtung gemäß der vorliegenden Beschreibung. Auch die SPS 110 zusammen mit dem Controller 130 kann ein Beispiel für eine Steuereinrichtung gemäß der vorliegenden Beschreibung sein. Weiterhin ist die SPS 110 ein Beispiel für eine externe Steuereinrichtung gemäß der vorliegenden Beschreibung.

Die Werkzeugmaschine 120 weist drei Energie-Betriebszustände auf:
- Einen "Normalzustand", bei welchem alle Anlagenteile 140, 142, 144, 150 sowie der Controller 130 der Werkzeugmaschine voll in Betrieb sind und mit Energie versorgt werden, so dass die Werkzeugmaschine 120 die vorgesehenen Aufgaben voll umfänglich wie vorgesehen ausführen kann;
- einen "Pausenzustand", bei welchem die mechanischen Anteile der Werkzeugmaschine, die Antriebe 142, 144 sowie der Werkzeugroboter 150 deaktiviert sind, allerdings der Controller voll umfänglich in Betrieb ist, so dass dieser jederzeit von der SPS 110 kommende Befehle analysieren und auswerten kann; und
- einen "Energiespar-Zustand", in welchem neben den mechanischen Anlagenteilen der Werkzeugmaschine 120 den Antrieben 142, 144 sowie dem Bearbeitungsroboter 150 auch der Controller 130 in einem reduzierten Aktivitätszustand derart ist, dass nur der Teil des Controllers 130 mit Energie versorgt wird, welcher zum Empfangen und Analysieren eines entsprechenden Aktivierungsbefehls von der SPS 110 notwendig ist.

Dabei hat die Anlage im Normalzustand den höchsten Gesamtverbrauch an zugeführter elektrischer Energie, im Pausenzustand den nächst niedrigen Gesamtverbrauch und den niedrigsten Gesamtverbrauch an elektrischer Energie im Energiespar-Zustand.

Die SPS 110 ist zur Ausgabe von Pausenbefehlen sowie Aufweckbefehlen ausgebildet und eingerichtet. Dabei ist einem Pausenbefehl weiterhin eine Information über die vorgesehene Länge der Pause beigefügt. Anhand dieser Pausenlänge kann der Controller 130 der z.B. im Normalzustand befindlichen Werkzeugmaschine 120 dann beispielsweise entscheiden, ob er die Werkzeugmaschine während der Pause im Normalzustand belässt, in den Pausenzustand versetzt oder sie gar in den Energiespar-Zustand versetzt.

In der Speichereinrichtung 132 des Controllers 130 sind vorgegebene Umschaltzeiten zwischen den vorstehend genannten Energie-Betriebszuständen in einer entsprechenden Datenbank gespeichert. Nach Erhalt eines entsprechenden Pausenbefehls kann der Controller bei im Normalzustand befindlicher Werkzeugmaschine 120 dann die Umschaltzeit in beispielsweise dem Pausenzustand und die beim Zurückschalten in den Normalzustand anfallende Hochfahrzeit mit der geplanten Pausenzeit vergleichen und beispielsweise die Werkzeugmaschine 120 im Normalzustand belassen, wenn nach Abzug der Herunter- und Hochfahrzeit keine oder nur eine geringe Pausenzeit verbleibt, so dass ein Herunterfahren in den Pausen- oder Energiesparzustand unwirtschaftlich wäre. Verbleibt nach Abzug der Umschaltzeiten eine mittlere Pausenzeit von beispielsweise einigen Minuten, einigen 10-Minuten oder auch einigen wenigen Stunden, so kann der Controller beispielsweise die Werkzeugmaschine 120 in den Pausenmodus versetzen, aus welchem die Maschine relativ schnell wieder hochgefahren werden kann. Bei noch längeren Pausen, beispielsweise über einige Stunden, über viele Stunden, über Nacht oder über ein Wochenende kann der Controller die Maschine dann in den Energiesparzustand fahren, wo die maximale Energieeinsparung erreicht wird, allerdings auch die längste Herunter- und/oder Hochfahrzeit erforderlich ist.

Weiterhin ermittelt der Controller 130 bei jedem der genannten Herunterfahr- und/oder Hochfahrvorgänge der Werkzeugmaschine zwischen den oben genannten Energie-Betriebszuständen die tatsächlich anfallende Umschaltzeit und speichert sie in einer entsprechenden Datenbank in der Speichereinrichtung 132 des Controllers ab. Diese Umschaltzeit kann beispielsweise die Zeit sein, die zwischen der Ausgabe eines entsprechenden Umschaltbefehls des Controllers 130 und dem Erreichen des neuen Energie-Betriebszustands verstreicht. Dabei kann das Erreichen des neuen Energie-Betriebzustandes beispielsweise dann vorgesehen sein, wenn im Controller der entsprechende Betriebszustand als vorliegend registriert ist oder dieser Betriebszustand erstmalig oder stabil vorliegt.

In einem beispielsweise direkt der Speicherung nachfolgenden Auswerteschritt wird die gemessene Umschaltzeit dann mit vorhergehend gemessenen Umschaltzeiten sowie einer vorgegebenen Umschaltzeit für den entsprechenden Umschaltvorgang verglichen. Weicht die aktuell gemessene Umschaltzeit vom letzten gemessenen Umschaltzeit-Wert und/oder von dem voreingestellten Umschaltzeit-Wert um mehr als einen jeweils vorgegebenen Schwellwert ab, so wird eine Warnmeldung über eine Anzeigeeinrichtung (Display) 160 der Werkzeugmaschine 120 ausgegeben. Aus dieser Warnmeldung kann ein Benutzer erkennen, dass sich eine Ein- oder Abschaltzeit um einen kritischen Wert verlängert hat und eine Überprüfung der Antriebe 142, 144 sowie des Werkzeugroboters 150 erforderlich ist. Auf diese Weise kann beispielsweise einem bevorstehenden Anlagenausfall vorgebeugt werden.

Der vorgenannte Analyseschritt kann auch in einem gesonderten Analyseablauf erfolgen. Dies kann beispielsweise standardmäßig so vorgesehen sein oder auch beispielsweise, nachdem die Werkzeugmaschine 120 vom Energiesparzustand wieder z.B. in den Normalzustand geschaltet wurde, da im Energiesparzustand der Controller 130 den Analyseschritt nicht durchführen kann.

Weiterhin ist vorgesehen, die in der Speichereinrichtung 132 des Controllers 130 gespeicherten Umschaltzeiten regelmäßig, beispielsweise in regelmäßigen Zeitabständen, oder auch immer nach dem Erfassen eines Wertes, in eine entsprechende Datenbank in der Speichereinrichtung 112 der SPS 110 zu übertragen. Diese Information kann dann beispielsweise in der vorstehend genannten Weise beispielsweise zur Planung von Wartungs- oder Pflegeaktivitäten oder auch zur Planung des Austauschs von Maschinenkomponenten verwendet werden.

Die vorliegende Erfindung betrifft ein Verfahren zur Überwachung einer Anlage, in welchem beim Wechseln der Anlage in verschiedene Energie-Betriebszustände, beispielsweise zwischen einem Normalzustand und einem oder mehreren Energiespar-Zuständen, die jeweiligen Umschaltzeiten, d. h. Herunter- und/oder Hochfahrzeiten, erfasst werden und protokolliert werden. Aus einem Vergleich der ermittelten Umschaltzeiten mit vergangenen Umschaltzeiten und/oder vorgegebenen Soll- oder Standartwerten lässt sich ein Rückschluss auf den Zustand der Anlage herstellen und damit rechtzeitig Wartungs-Pflege- und Austauschmaßnahmen einleiten.

## Patentansprüche

1. Verfahren zur Überwachung einer Anlage (120) mit einem ersten und einem zweiten Energie-Betriebszustand,
wobei die Anlage (120) im ersten und zweiten Energie-Betriebszustand einen unterschiedlichen Energieverbrauch aufweist,
**gekennzeichnet durch** die folgenden Schritte:
a.) Umschalten der Anlage (120) mittels eines ersten Schalt-Befehls vom ersten in den zweiten Energie-Betriebszustand,
b.) Ermitteln einer ersten Umschalt-Zeitspanne zwischen dem Beginn des Umschaltvorgangs und dem Erreichen des zweiten Energie-Betriebszustands,
**gekennzeichnet durch** die weiteren Schritte:
c.) Abspeichern der ersten Umschalt-Zeitspanne in einer der Anlage zugeordneten Datenbank für UmschaltZeitspannen,
und/oder
Abspeichern einer unter Verwendung der ersten Umschalt-Zeitspanne ermittelten Zustands-Information bezüglich der Anlage in einer der Anlage zugeordneten Zustands-Datenbank,
d.) Vergleichen der ermittelten ersten Umschalt-Zeitspanne mit mindestens einer früher gemessenen Umschalt-Zeitspanne für die Umschaltung des Geräts vom ersten in den zweiten Energie-Betriebszustand
und/oder
mit einer vorgegebenen Umschalt-Zeitspanne für die Umschaltung des Geräts vom ersten in den zweiten Energie-Betriebszustand, und
e.) Auswerten des Vergleichs.

2. Verfahren nach Anspruch 1,
**gekennzeichnet durch** den weiteren Schritt:
f.) Ausgabe einer Warn-Information über einen kritischen Betriebszustand der Anlage aufgrund der Auswertung des Vergleichs.

3. Verfahren nach einem der Ansprüche 1 oder 2,
**gekennzeichnet dadurch,**
**dass** vor dem Verfahrensschritt a.) die Anlage eine Umschalt-Anfrage mit mindestens einem Umschaltparameter erhält und die Anlage aufgrund einer Anfrage-Auswertung unter Verwendung des mindestens einen Umschaltparameters den ersten Umschalt-Befehl auslöst.

4. Verfahren nach Anspruch 3,
**dadurch gekennzeichnet,**
**dass** der mindestens eine Umschaltparameter einen vorgesehenen Abschalt- oder Pausenzeitpunkt und/oder einen vorgesehenen Abschalt- oder Pausenzeitraum umfasst.

5. Verfahren nach Anspruch 3 oder 4,
**dadurch gekennzeichnet,**
**dass** bei der Anfrage-Auswertung weiterhin eine oder mehrere vorgegebene und/oder ermittelte Umschaltzeiten mitberücksichtigt werden.

6. Anlage (120), wobei die Anlage (120) derart eingerichtet und ausgebildet ist, dass sie in einem ersten und einem zweiten Energie-Betriebszustand betreibbar ist,
wobei die Anlage (120) im ersten und zweiten Energie-Betriebszustand einen unterschiedlichen Energieverhrauch aufweist,
die Anlage umfassend:
- eine Steuereinrichtung (130), die zur Durchführung eines Verfahrens gemäß einem der Ansprüche 1 bis 5 ausgebildet und eingerichtet ist.

7. Anlage nach Anspruch 6,
**dadurch gekennzeichnet,**
**dass** die Anlage (120) weiterhin eine Speichereinrichtung (132) zur Speicherung der ersten Umschalt-Zeitspanne, der Zustands-Information bezüglich der Anlage, der mindestens einen früher gemessenen Umschalt-Zeitspanne, der Datenbank für Umschalt-Zeitspannen, der zustands-Datenbank und/oder der vorgegebenen Umschalt-Zeitspanne umfasst.

8. Anlage nach Anspruch 6 oder 7,
**dadurch gekennzeichnet,**
**dass** die Anlage (120) eine Ausgabeeinrichtung (160) zur Ausgabe einer Warn-Information nach Anspruch 3 umfasst.

9. Anlage nach einem der Ansprüche 6 bis 8,
**dadurch gekennzeichnet,**
**dass** die Steuereinrichtung (130) der Anlage zum Empfang einer Umschalt-Anfrage, zur Durchführung der Anfrage-Auswertung und zum Auslösen des ersten Umschaltbefehls gemäß einem der Ansprüche 4 bis 6 ausgebildet und eingerichtet ist.

10. Anlagensystem, welches zur Durchführung eines Verfahrens gemäß einem der Ansprüche 1 bis 5 eingerichtet und ausgebildet ist, umfassend:
- eine Anlage (120) gemäß einem der Ansprüche 6 bis 9, und
- eine externe Steuereinrichtung (110), die zur Steuerung- und/oder Regelung der Anlage über eine drahtgebundene oder drahtlose Schnittstelle eingerichtet und ausgebildet ist.

11. Anlagensystem nach Anspruch 10,
**dadurch gekennzeichnet,**
**dass** die externe Steuereinrichtung (110) eine Speichereinrichtung (112) zur Speicherung der ersten Umschalt-Zeitspanne, der Zustands-Information bezüglich der Anlage, der mindestens einen früher gemessenen Umschalt-Zeitspanne, der Datenbank für Umschalt-Zeitspannen, Zustands-Datenbank und/oder der vorgegebenen Umschalt-Zeitspanne umfasst.

12. Anlagensystem nach Anspruch 10 oder 11,
**dadurch gekennzeichnet,**
**dass** die externe Steuereinrichtung (110) eine Ausgabeeinrichtung zur Ausgabe einer Warn-Information nach Anspruch 3 umfasst.

13. Anlagensystem nach einem der Ansprüche 10 bis 12,
**dadurch gekennzeichnet,**
**dass** die externe Steuereinrichtung (110) zur Ausgabe einer Umschalt-Anfrage gemäß Anspruch 4 oder 5 an die Anlage ausgebildet und eingerichtet ist.

## Claims

1. Method for monitoring an installation (120) having a first and a second energy operating state,
the installation (120) having a different energy consumption in the first and second energy operating states,
**characterized by** the following steps:
a.) changing over the installation (120) by means of a first switching command from the first into the second energy operating state,
b.) determining a first changeover time period between the beginning of the changeover process and the attainment of the second energy operating state,
**characterized by** the following further steps:
c.) storing the first changeover time period in a database for changeover time periods which is assigned to the installation,
and/or
storing state information, determined using the first changeover time period, regarding the installation in a state database assigned to the installation,
d.) comparing the first changeover time period determined with at least one changeover time period measured earlier for the changeover of the apparatus from the first into the second energy operating state
and/or
with a predetermined changeover time period for the changeover of the apparatus from the first into the second energy operating state, and
e.) evaluating the comparison.

2. Method according to Claim 1,
**characterized by** the following further step:
f.) outputting warning information about a critical operating state of the installation on account of the evaluation of the comparison.

3. Method according to either of Claims 1 and 2,
**characterized**
**in that**, before method step a.) the installation receives a changeover enquiry with at least one changeover parameter and the installation initiates the first changeover command on account of an enquiry evaluation using the at least one changeover parameter.

4. Method according to Claim 3,
**characterized**
**in that** the at least one changeover parameter comprises an envisaged switch-off or pause instant and/or an envisaged switch-off or pause period.

5. Method according to Claim 3 or 4,
**characterized**
**in that** one or more predetermined and/or determined changeover times are furthermore concomitantly taken into consideration in the enquiry evaluation.

6. Installation (120), the installation (120) being designed and embodied in such a way that it can be operated in a first and a second energy operating state,
the installation (120) having a different energy consumption in the first and second energy operating state,
the installation comprising:
- a control device (130), which is embodied and designed for carrying out a method according to any of Claims 1 to 5.

7. Installation according to claim 6,
**characterized**
**in that** the installation (120) furthermore comprises a storage device (132) for storing the first changeover time period, the state information regarding the installation, the at least one changeover time period measured earlier, the database for changeover time periods, the state database and/or the predetermined changeover time period.

8. Installation according to Claim 6 or 7,
**characterized**
**in that** the installation (120) comprises an output device (160) for outputting warning information according to Claim 2.

9. Installation according to any of Claims 6 to 8,
**characterized**
**in that** the control device (130) of the installation is embodied and designed for receiving a changeover enquiry for carrying out the enquiry evaluation and for initiating the first changeover command according to any of Claims 3 to 5.

10. Installation system designed and embodied for carrying out a method according to any of Claims 1 to 5, comprising:
- an installation (120) according to any of Claims 6 to 9, and
- an external control device (110), which is designed and embodied for the open-loop and/or closed-loop control of the installation via a wire-based or wireless interface.

11. Installation system according to Claim 10,
**characterized**
**in that** the external control device (110) comprises a storage device (112) for storing the first changeover time period, the state information regarding the installation, the at least one changeover time period measured earlier, the database for changeover time periods, the state database and/or the predetermined changeover time period.

12. Installation system according to Claim 10 or 11,
**characterized**
**in that** the external control device (110) comprises an output device for outputting warning information according to Claim 2.

13. Installation system according to any of Claims 10 to 12,
**characterized**
**in that** the external control device (110) is embodied and designed for outputting a changeover enquiry according to Claim 3 or 4 to the installation.

## Revendications

1. Procédé de contrôle d'une installation ( 120 ) ayant un premier et un deuxième états de fonctionnement énergétiques, l'installation ( 120 ) ayant une consommation d'énergie différente dans le premier et le deuxième états de fonctionnement énergétiques,
**caractérisé par** les stades suivants :
a.) on fait passer l'installation ( 120 ) au moyen d'une première instruction de commutation du premier au deuxième état de fonctionnement énergétique,
b.) on détermine un premier laps de temps de passage entre l'instant où débute l'opération de passage et l'instant où le deuxième état de fonctionnement énergétique est atteint,
**caractérisé par** les autres stades :
c.) on mémorise le premier laps de temps de passage dans une base de données des laps de temps de passage affectée à l'installation,
et/ou
on mémorise une information d'état, déterminée en utilisant le premier laps de temps de passage et concernant l'installation dans une base de données d'état affectée à l'installation,
d.) on compare le premier laps de temps de passage déterminé à au moins un laps de temps de passage mesuré précédemment pour faire passer l'appareil du premier au deuxième état de fonctionnement énergétique et/ou à un laps de temps de passage prescrit pour le passage de l'appareil du premier au deuxième état de fonctionnement énergétique,
e.) on exploite la comparaison.

2. Procédé suivant la revendication 1,
**caractérisé par** le stade supplémentaire :
f.) on émet une information d'avertissement sur un état de fonctionnement critique de l'installation sur la base de l'exploitation de la comparaison.

3. Procédé suivant l'une des revendications 1 ou 2,
**caractérisé en ce que**,
avant le stade a.) du procédé, l'installation reçoit une demande de passage par au moins un paramètre de passage et l'installation déclenche, sur la base d'une exploitation de la demande, la première instruction de passage en utilisant le au moins un paramètre de passage.

4. Procédé suivant la revendication 3,
**caractérisé en ce que**,
le au moins un paramètre de passage comprend un instant prévu d'arrêt ou d'interruption et/ou une durée prévue d'arrêt ou d'interruption.

5. Procédé suivant la revendication 3 ou 4,
**caractérisé en ce que**,
dans l'exploitation de la demande, on tient compte en outre d'un ou de plusieurs temps de passage prescrit et/ou déterminé.

6. Installation ( 120 ), l'installation ( 120 ) étant conçue et constituée pour pouvoir fonctionner dans un premier et dans un deuxième états de fonctionnement énergétiques,
l'installation ( 120 ) ayant une consommation d'énergie différente dans le premier et dans le deuxième états de fonctionnement énergétiques,
l'installation comprenant :
- un dispositif ( 130 ) de commande qui est constitué et conçu pour effectuer un procédé suivant l'une des revendications 1 à 5.

7. Installation suivant la revendication 6,
**caractérisée en ce que**,
l'installation comprend en outre un dispositif ( 132 ) de mémorisation pour la mémorisation du premier laps de temps de passage, de l'information d'état concernant l'installation, du au moins un laps de temps de passage mesuré précédemment, de la base de données de laps de temps de passage, de la base de données d'état et/ou du laps de temps de passage prescrit.

8. Installation suivant la revendication 6 ou 7,
**caractérisée en ce que**,
l'installation ( 120 ) comprend un dispositif ( 160 ) d'émission d'une information d'avertissement suivant la revendication 3.

9. Installation suivant l'une des revendications 6 à 8,
**caractérisée en ce que**
le dispositif ( 130 ) de commande est constitué et conçu pour effectuer l'exploitation de la demande et pour le déclenchement de la première instruction de passage suivant l'une des revendications 4 à 6.

10. Système d'installation qui est conçu et constitué pour effectuer un procédé suivant l'une des revendications 1 à 5 comprenant :
- une installation ( 120 ) suivant l'une des revendications 6 à 9, et
- un dispositif ( 110 ) extérieur de commande qui est conçu et constitué pour la commande et/ou la régulation de l'installation par une interface par fil ou sans fil.

11. Système d'installation suivant la revendication 10,
**caractérisé**
**en ce que** le dispositif ( 110 ) extérieur de commande comprend un dispositif ( 112 ) de mémorisation du premier laps de temps de passage, de l'information d'état concernant l'installation, du au moins un laps de temps de passage mesuré précédemment, de la base de données de laps de temps de passage, de la base de données d'état et/ou du laps de temps de passage prescrit.

12. Système d'installation suivant la revendication 10 ou 11,
**caractérisé**
**en ce que** le dispositif ( 110 ) extérieur de commande comprend un dispositif d'émission d'une information d'avertissement suivant la revendication 3.

13. Système d'installation suivant l'une des revendications 10 à 12,
**caractérisé**
**en ce que** le dispositif ( 110 ) extérieur de commande est constitué et conçu pour l'envoi d'une demande de passage suivant la revendication 4 ou 5 à l'installation.
